# EUROPEAN PATENT APPLICATION

(11) **EP 3 647 678 A1**
(43) Date of publication of application: **06.05.2020**
(21) Application number: 17916258.1
(22) Date of filing: 30.06.2017
(51) Int. Cl.: F25B 1/00

(54) **REFRIGERATION CYCLE DEVICE AND DRIVE DEVICE**

(71) Applicant: Mitsubishi Electric Corporation, Chiyoda-ku Tokyo 100-8310 (JP)
(72) Inventor: NORIMATSU, Yasuharu, Tokyo 100-8310 (JP); NISHIZAWA, Akira, Tokyo 100-8310 (JP)
(74) Representative: Pfenning, Meinig & Partner mbB
(86) International application number: PCT/JP2017/024200
(87) International publication number: WO 2019/003430

(57) **Abstract**

A refrigeration cycle apparatus (100) includes a compressor (15) drawing refrigerant from a suction port, compressing the refrigerant using rotation of a motor (25), and discharging the refrigerant compressed from a discharge port, and a compressor driving circuit (102) controlling rotation of the motor (25). The compressor driving circuit (102) includes a start-up determination device (32) determining whether the compressor (15) is caused to perform a normal start-up or a differential pressure start-up based on a differential pressure between the suction port and the discharge port at the time of starting up the compressor (15), where the normal start-up is to start up the compressor (15) with an output voltage having a first amplitude and the differential pressure start-up is to start up the compressor (15) with an output voltage having a second amplitude greater than the first amplitude. The start-up determination device (32) determines to perform the differential pressure start-up when the differential pressure is higher than a first differential pressure and lower than a second differential pressure, and determines to perform the normal start-up when the differential pressure is equal to or higher than the second differential pressure or is equal to or lower than the first differential pressure.

## Description

### Field

The present invention relates to a refrigeration cycle apparatus including a compressor, and also relates to a driving device.

### Background

A refrigerant circuit is a circuit in which heat exchange can be performed by driving a compressor. Immediately after the compressor has shifted from an operational state to an operation-stop state, this refrigerant circuit has a differential pressure that is a difference in refrigerant pressure between a suction port and a discharge port of the compressor.

In order to restart the compressor in such a state that there is a differential pressure, the refrigerant circuit needs greater torque than a case where there is no differential pressure. In order to obtain greater torque, the amplitude of the output voltage to the compressor needs to be increased. A driving device described in Patent Literature 1 detects a differential pressure in an electric compressor at the time of start-up. When there is a differential pressure, the driving device sets a higher current threshold for an overcurrent protective unit to apply a higher start-up voltage than usual to the electric compressor. Due to this voltage application, the driving device described in Patent Literature 1 can obtain higher motor torque at the time of start-up, and thus even when there is a differential pressure, it is still possible to start up the electric compressor.

### Citation List

### Patent Literature

Patent Literature 1: Japanese Patent Application Laid-open No. 2006-29342

### Summary

### Technical Problem

However, Patent Literature 1 described above as a conventional technique does not take into account vibrations of the compressor generated at the time of starting up the compressor when there is a differential pressure. Accordingly, there is a problem in that at the time of start-up of the compressor, the compressor is damaged due to vibrations of the compressor.

The present invention has been achieved in view of the above, and an object of the present invention is to provide a refrigeration cycle apparatus that can reduce vibrations of a compressor generated at the time of starting up the compressor when there is a differential pressure.

### Solution to Problem

In order to solve the above problems and achieve the object, a refrigeration cycle apparatus according to an aspect of the present invention includes: a condenser to dissipate heat from refrigerant; an evaporator to cause the refrigerant to absorb heat; a compressor to draw the refrigerant, delivered from the condenser, from a suction port, compress the refrigerant using rotation of a motor, and discharge the refrigerant compressed from a discharge port to the evaporator; and a compressor driving circuit to control rotation of the motor by an inverter circuit. The compressor driving circuit includes a start-up determination device to determine whether the compressor is caused to perform a normal start-up or a differential pressure start-up on a basis of a differential pressure that is a pressure difference between the suction port and the discharge port at a time of starting up the compressor, where the normal start-up is to start up the compressor with an output voltage having a first amplitude and the differential pressure start-up is to start up the compressor with an output voltage having a second amplitude greater than the first amplitude. The start-up determination device determines to perform the differential pressure start-up when the differential pressure is higher than a first differential pressure and lower than a second differential pressure, and determines to perform the normal start-up when the differential pressure is equal to or higher than the second differential pressure or is equal to or lower than the first differential pressure, and the compressor driving circuit causes the compressor to perform either the normal start-up or the differential pressure start-up on a basis of a determination result from the start-up determination device.

### Advantageous Effects of Invention

The refrigeration cycle apparatus according to the present invention has an effect where it is possible to reduce vibrations of a compressor generated at the time of starting up the compressor when there is a differential pressure.

### Brief Description of Drawings

FIG. 1 is a diagram illustrating a configuration of a refrigeration cycle apparatus according to an embodiment of the present invention.
FIG. 2 is a flowchart illustrating a procedure for a start-up method determination process to be performed by the refrigeration cycle apparatus according to the embodiment.
FIG. 3 is an explanatory diagram of the duty ratio for differential pressure start-up according to the embodiment.
FIG. 4 is an explanatory diagram of an energy amount needed for start-up according to the embodiment.
FIG. 5 is an explanatory diagram of the relation between the duty ratio and the output voltage according to the embodiment.
FIG. 6 is a diagram illustrating an example of a hardware configuration of a start-up determination device according to the embodiment.

### Description of Embodiments

A refrigeration cycle apparatus and a driving device according to embodiments of the present invention will be described in detail below with reference to the accompanying drawings. The present invention is not limited to the embodiments.

### Embodiment.

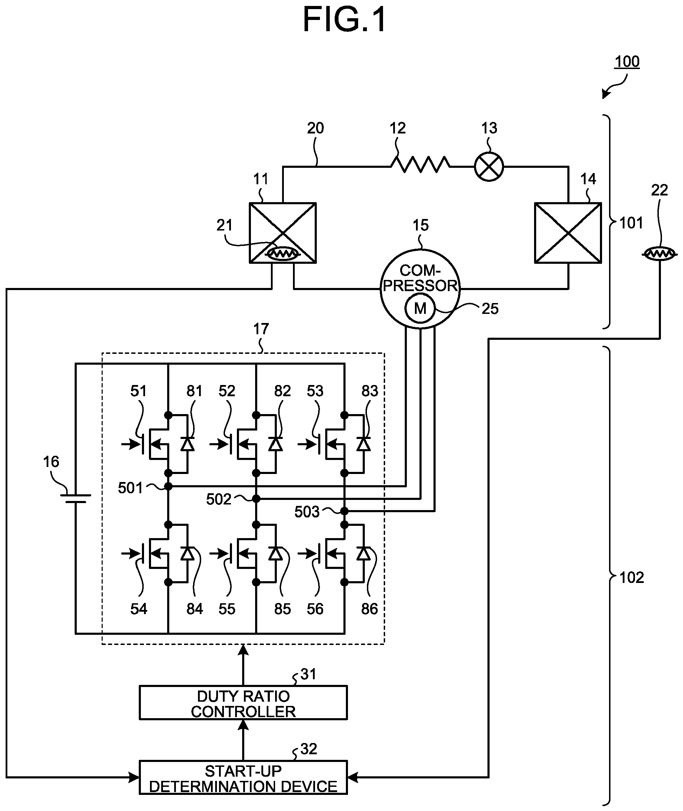

FIG. 1 is a diagram illustrating a configuration of a refrigeration cycle apparatus according to an embodiment of the present invention. A refrigeration cycle apparatus 100 is an apparatus that performs a cooling process while circulating refrigerant by heat pump cycles that are refrigeration cycles. The refrigeration cycle apparatus 100 is applied to an apparatus such as a refrigerator or an air conditioner.

The refrigeration cycle apparatus 100 includes a refrigerant circuit 101 that causes refrigerant to circulate in a refrigerant pipe 20 and a compressor driving circuit 102 that controls a compressor 15 in the refrigerant circuit 101. The refrigerant circuit 101 includes the compressor 15 that compresses refrigerant, an evaporator 11 connected to the compressor 15, an expansion valve 12 connected to the evaporator 11, a solenoid valve 13 connected to the expansion valve 12, and a condenser 14 connected to the solenoid valve 13. In the refrigerant circuit 101, the compressor 15, the evaporator 11, the expansion valve 12, the solenoid valve 13, and the condenser 14 are connected in the described order by the refrigerant pipe 20.

The evaporator 11 exchanges heat between refrigerant and a heat medium such as air or water. The evaporator 11 causes refrigerant, delivered from the compressor 15 on the upstream side, to absorb heat and then delivers the refrigerant to the expansion valve 12 on the downstream side.

The evaporator 11 is a heat exchanger and has functions of both the condenser and the evaporator. The evaporator 11 is configured to correspond to the heat medium to be subjected to heat exchange. In a case where the heat medium is air and where the evaporator 11 performs heat exchange using the air, then the evaporator 11 can be configured from a fin-and-tube heat exchanger. In a case where the heat medium is liquid such as water or brine and where the evaporator 11 performs heat exchange using the liquid, then the evaporator 11 can be configured from a microchannel heat exchanger, a shell-and-tube heat exchanger, a heat-pipe heat exchanger, a double-pipe heat exchanger, or a plate heat exchanger.

The expansion valve 12 that is an example of the decompression mechanism is a valve for controlling the refrigerant flow rate. The expansion valve 12 is opened/closed to adjust the refrigerant flow rate. Other examples of the decompression mechanism include an expansion valve having a variable throttle opening structure, a mechanical expansion valve employing a diaphragm for a pressurized portion, and a capillary tube.

The solenoid valve 13 is a valve to close a refrigerant flow path. The solenoid valve 13 is closed to stop the refrigerant flow and is opened to pass the refrigerant flow. The solenoid valve 13 may have any mechanical structure as long as opening/closing of the solenoid valve 13 can be controlled by an electrical signal.

The condenser 14 exchanges heat between refrigerant and a heat medium such as air or water. The condenser 14 is a device that dissipates heat of refrigerant delivered from the evaporator 11 on the upstream side, and then delivers the refrigerant to the compressor 15 on the downstream side.

The condenser 14 is a heat exchanger and has functions of both the condenser and the evaporator. The condenser 14 is configured to correspond to the heat medium to be subjected to heat exchange. In a case where the heat medium is air and where the condenser 14 performs heat exchange using the air, then the condenser 14 can be configured from a fin-and-tube heat exchanger. In a case where the heat medium is liquid such as water or brine and where the condenser 14 performs heat exchange using the liquid, then the condenser 14 can be configured from a microchannel heat exchanger, a shell-and-tube heat exchanger, a heat-pipe heat exchanger, a double-pipe heat exchanger, or a plate heat exchanger.

The compressor 15 is a device that includes a motor 25 and compresses refrigerant using the motor 25. The compressor 15 uses rotation of the motor 25 to compress refrigerant drawn from the condenser 14 and discharges the compressed refrigerant to the evaporator 11. The compressor 15 is controlled by the compressor driving circuit 102 that is the driving device.

The compressor 15 includes a refrigerant compression chamber. In the refrigerant compression chamber, a machine for compressing refrigerant is located. The compressor 15 has a suction port and a discharge port. The suction port and the discharge port form part of the refrigerant circuit 101. The suction port of the compressor 15 is connected to the condenser 14. Refrigerant from the condenser 14 is drawn into the compressor 15 through the suction port. The discharge port of the compressor 15 is connected to the evaporator 11. Refrigerant is discharged from the compressor 15 through the discharge port to the evaporator 11.

The motor 25 located in the compressor 15 is, for example, a sensorless brushless motor. A sensorless brushless motor includes a stator and a rotor. The stator has a structure in which a coil is wound around a yoke. The rotor is configured from a member that serves as a permanent magnet. The compressor 15 drives a machine for compressing refrigerant by driving the motor 25, compresses, in the refrigerant compression chamber, the refrigerant introduced from the suction port, and then discharges the compressed refrigerant from the discharge port.

The compressor 15 is configured to be capable of controlling the rotational speed. The compressor 15 is an inverter-driven compressor in which the rotational speed is controlled by an inverter circuit 17. Examples of the inverter-driven compressor include a rotary compressor, a scroll compressor, and a reciprocating compressor. These inverter-driven compressors are affected in various ways by the type of refrigerant, the type of lubricant, or the amount of lubricant. For this reason, depending on the conditions of use, the inverter-driven compressor obtains different torque for operating the refrigerant compression chamber and is also supplied with a different control voltage output from the inverter circuit 17. The expansion valve 12 and the solenoid valve 13 are not limited to being located at their respective positions described above, but may be located at any position in the refrigerant circuit 101.

The refrigeration cycle apparatus 100 further includes a temperature sensor 22 that detects the outside-air temperature. The temperature sensor 22 that is the first temperature detection unit is located outside the refrigerant circuit 101 to detect the temperature outside the refrigerant circuit 101. The temperature sensor 22 transmits the detected temperature to the compressor driving circuit 102.

The evaporator 11 includes a temperature sensor 21 that detects the temperature inside the evaporator 11. The temperature sensor 21 that is the second temperature detection unit transmits the detected temperature to the compressor driving circuit 102. In the following descriptions, the temperature detected by the temperature sensor 22 is referred to as "outside-air temperature", while the temperature detected by the temperature sensor 21 is referred to as "evaporator temperature".

It is allowable that the refrigeration cycle apparatus 100 includes a discharge pressure sensor, a discharge temperature sensor, a condenser outlet pressure sensor, or a condenser outlet temperature sensor. The discharge pressure sensor detects the pressure at the discharge port of the compressor 15. The discharge temperature sensor detects the temperature at the discharge port of the compressor 15. The condenser outlet pressure sensor detects the pressure at the outlet of the condenser 14. The condenser outlet temperature sensor detects the temperature at the outlet of the condenser 14.

The compressor driving circuit 102 is connected to the refrigerant circuit 101. The compressor driving circuit 102 includes a DC voltage power supply 16 that outputs a DC voltage and the inverter circuit 17 that controls the rotational speed of the compressor 15. The compressor driving circuit 102 further includes a duty ratio controller 31 that controls the duty ratio of a pulse of a DC voltage to be applied to the inverter circuit 17, and a start-up determination device 32 that determines a start-up method for the compressor 15. The DC voltage power supply 16 applies a DC voltage to the inverter circuit 17.

In the compressor driving circuit 102, the start-up determination device 32 is connected to the duty ratio controller 31, and the duty ratio controller 31 is connected to the inverter circuit 17. The inverter circuit 17 is connected to the DC voltage power supply 16 and the compressor 15.

In the compressor driving circuit 102, the inverter circuit 17 that converts a DC voltage to an AC voltage controls the rotation of the motor 25 included in the compressor 15. The inverter circuit 17 converts a DC voltage from the DC voltage power supply 16 to a pseudo sinusoidal AC voltage, and outputs the AC voltage obtained by the conversion to the motor 25 of the compressor 15. The compressor 15 uses the pseudo AC voltage from the inverter circuit 17 to generate a rotating magnetic field in the motor 25 to rotate the motor 25.

The inverter circuit 17 is a circuit configured to include six switching elements 51 to 56, freewheeling diodes 81 to 86, and connection points 501 to 503. The inverter circuit 17 outputs a voltage corresponding to the duty ratio to the motor 25 of the compressor 15.

Examples of the switching elements 51 to 56 include an IGBT (Insulated Gate Bipolar Transistor) and a MOSFET (Metal-Oxide-Semiconductor Field Effect Transistor). These elements are formed of a silicon semiconductor. The freewheeling diodes 81 to 86 are respectively connected in parallel to the switching elements 51 to 56.

The inverter circuit 17 includes the switching elements 51 and 54 that are a pair of switching elements connected in series, the switching elements 52 and 55 that are a pair of switching elements connected in series, and the switching elements 53 and 56 that are a pair of switching elements connected in series. A pair of the switching elements 51 and 54, a pair of the switching elements 52 and 55, and a pair of the switching elements 53 and 56 are individually referred to as "arm". These arms are connected in parallel to one another. The midpoint of each arm of the inverter circuit 17 is connected to a corresponding phase terminal of the motor 25. The connection point 501 that is the midpoint between the switching element 51 and the switching element 54 is connected to a U-phase terminal of the motor 25. The connection point 502 that is the midpoint between the switching element 52 and the switching element 55 is connected to a V-phase terminal of the motor 25. The connection point 503 that is the midpoint between the switching element 53 and the switching element 56 is connected to a W-phase terminal of the motor 25.

The start-up determination device 32 is connected to the temperature sensor 21 to receive the evaporator temperature detected by the temperature sensor 21 from the temperature sensor 21. The start-up determination device 32 is also connected to the temperature sensor 22 to receive the outside-air temperature detected by the temperature sensor 22 from the temperature sensor 22.

On the basis of the evaporator temperature and the outside-air temperature, the start-up determination device 32 estimates a differential pressure that is a difference in refrigerant pressure between the suction port and the discharge port at the time of starting up the compressor 15. On the basis of the estimated differential pressure, the start-up determination device 32 determines a subsequent start-up method for starting up the compressor 15.

The start-up method for the compressor 15, to be implemented by the refrigeration cycle apparatus 100, is either normal start-up or differential pressure start-up. The normal start-up is a method to start up the compressor 15 by using a first amplitude as the amplitude of the output voltage to the motor 25. The differential pressure start-up is a method to start up the compressor 15 by using a second amplitude greater than the first amplitude as the amplitude of the output voltage to the motor 25. On the basis of the estimated value of the differential pressure, the start-up determination device 32 determines whether the compressor 15 is caused to perform the normal start-up or the differential pressure start-up, that is, determines which of the normal start-up and the differential pressure start-up the compressor 15 is caused to perform.

When the differential pressure is higher than a first differential pressure and lower than a second differential pressure, the start-up determination device 32 according to the present embodiment determines to perform the differential pressure start-up. The first differential pressure is lower than the second differential pressure. When the differential pressure is equal to or higher than the second differential pressure or is equal to or lower than the first differential pressure, the start-up determination device 32 determines to perform the normal start-up. In other words, the start-up determination device 32 determines to perform the normal start-up when the differential pressure falls out of a specific range, and determines to perform the differential pressure start-up when the differential pressure falls within the specific range. The specific range described herein ranges from the first differential pressure to the second differential pressure.

As described above, the start-up determination device 32 determines to perform the normal start-up when a differential pressure is so high that the compressor 15 vibrates at the time of startup and when a differential pressure is too low to perform the differential pressure start-up. Further, the start-up determination device 32 determines to perform the differential pressure start-up when there is a differential pressure with which the differential pressure start-up can be performed and when the differential pressure start-up can be performed without causing vibrations of the compressor 15 at the time of startup. The start-up determination device 32 outputs the determination result to the duty ratio controller 31.

On the basis of the determination result from the start-up determination device 32, the duty ratio controller 31 controls the duty ratio of a pulse of a DC voltage to be applied to the inverter circuit 17. When the duty ratio controller 31 receives the determination result indicating that the differential pressure start-up is performed, the duty ratio controller 31 controls the inverter circuit 17 such that the duty ratio corresponding to the differential pressure start-up is obtained. When the duty ratio controller 31 receives the determination result indicating that the normal start-up is performed, the duty ratio controller 31 controls the inverter circuit 17 such that the duty ratio corresponding to the normal start-up is obtained. The duty ratio corresponding to the normal start-up is the duty ratio at which the amplitude of the output voltage to the motor 25 is the first amplitude. The duty ratio corresponding to the differential pressure start-up is the duty ratio at which the amplitude of the output voltage to the motor 25 is the second amplitude greater than the first amplitude.

The inverter circuit 17 outputs the voltage with the amplitude corresponding to the duty ratio to the motor 25. Specifically, when the inverter circuit 17 receives pulses with the duty ratio corresponding to the differential pressure start-up, the inverter circuit 17 outputs the voltage corresponding to the differential pressure start-up to the compressor 15. When the inverter circuit 17 receives pulses with the duty ratio corresponding to the normal start-up, the inverter circuit 17 outputs the voltage corresponding to the normal start-up to the compressor 15. In this manner, the inverter circuit 17 outputs the voltage corresponding to the duty ratio to the compressor 15 to thereby switch between the normal start-up and the differential pressure start-up. Due to this switching, the compressor 15 performs start-up corresponding to the output voltage from the inverter circuit 17. As described above, the compressor driving circuit 102 causes the compressor 15 to perform either the normal start-up or the differential pressure start-up on the basis of the determination result provided by the start-up determination device 32.

The voltage intended for operating the inverter circuit 17 is not limited to a DC voltage from the DC voltage power supply 16, but may also be a voltage other than the DC voltage from the DC voltage power supply 16. The voltage intended for operating the inverter circuit 17 may also be a voltage from an AC voltage power supply smoothed using a converter circuit.

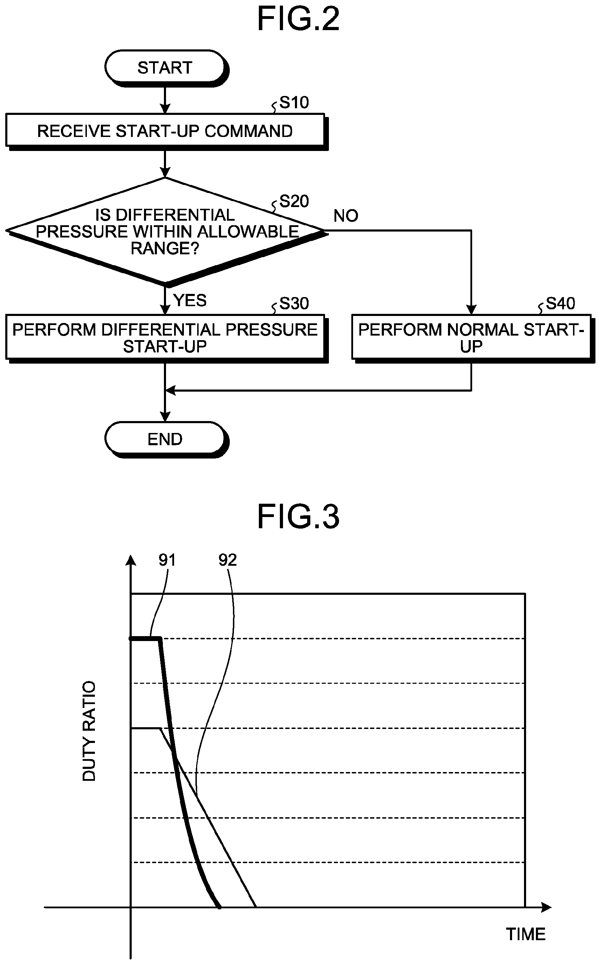

Next, descriptions are given of a procedure for the start-up method determination process to be performed by the refrigeration cycle apparatus 100. FIG. 2 is a flowchart illustrating a procedure for the start-up method determination process to be performed by the refrigeration cycle apparatus according to the present embodiment.

When the start-up determination device 32 included in the compressor driving circuit 102 in the refrigeration cycle apparatus 100 receives a start-up command from a user at Step S10, the start-up determination device 32 estimates a differential pressure between the suction port and the discharge port at the time of starting up the compressor 15 on the basis of the evaporator temperature and the outside-air temperature.

It is allowable that the start-up determination device 32 estimates a differential pressure on the basis of one of the evaporator temperature and the outside-air temperature. It is also allowable that the start-up determination device 32 estimates a differential pressure by using information other than the evaporator temperature or the outside-air temperature in combination with additional information. In this case, the start-up determination device 32 may estimate a differential pressure by using the opened/closed position of the valve included in the solenoid valve 13, the elapsed time since the compressor 15 is stopped, the rotational speed of the motor 25 before the compressor 15 is stopped, or the output voltage from the inverter circuit 17 to the motor 25 before the compressor 15 is stopped.

In a case where the start-up determination device 32 estimates a differential pressure without using the evaporator temperature, the temperature sensor 21 is not needed. In a case where the start-up determination device 32 estimates a differential pressure without using the outside-air temperature, the temperature sensor 22 is not needed.

At Step S20, the refrigeration cycle apparatus 100 determines whether a differential pressure falls within an allowable range. The allowable range for a differential pressure is a range where the differential pressure is higher than the first differential pressure and lower than the second differential pressure. Therefore, the start-up determination device 32 determines whether a differential pressure falls within the range where the differential pressure is higher than the first differential pressure and lower than the second differential pressure.

When the differential pressure is higher than the first differential pressure and lower than the second differential pressure, that is, YES is determined at Step S20, the refrigeration cycle apparatus 100 performs the differential pressure start-up at Step S30. Specifically, when the differential pressure is higher than the first differential pressure and lower than the second differential pressure, the start-up determination device 32 determines to perform the differential pressure start-up and outputs the determination result to the duty ratio controller 31. The duty ratio controller 31 then controls the inverter circuit 17 such that the duty ratio corresponding to the differential pressure start-up is obtained. Due to this control, the inverter circuit 17 outputs a voltage with the second amplitude corresponding to the differential pressure start-up to the compressor 15.

In contrast, when the differential pressure is equal to or higher than the second differential pressure or is equal to or lower than the first differential pressure, that is, NO is the determined at Step S20, the refrigeration cycle apparatus 100 performs the normal start-up at Step S40. Specifically, when the differential pressure is equal to or higher than the second differential pressure or is equal to or lower than the first differential pressure, the start-up determination device 32 determines to perform the normal start-up and outputs the determination result to the duty ratio controller 31. The duty ratio controller 31 then controls the inverter circuit 17 such that the duty ratio corresponding to the normal start-up is obtained. Due to this control, the inverter circuit 17 outputs a voltage with the first amplitude corresponding to the normal start-up to the compressor 15.

In this manner, in the refrigeration cycle apparatus 100, the compressor driving circuit 102 determines the start-up method and causes the compressor 15 to perform either the normal start-up or the differential pressure start-up on the basis of the determination result.

The duty ratio for the differential pressure start-up is described here. FIG. 3 is an explanatory diagram of the duty ratio for the differential pressure start-up according to the present embodiment. The horizontal axis of the graph illustrated in FIG. 3 represents time, while the vertical axis of the graph represents the duty ratio. FIG. 3 illustrates a duty ratio 91 for the differential pressure start-up and a duty ratio 92 for the normal start-up from the time 0 at the beginning of the start-up.

Immediately after the start-up of the compressor 15, the duty ratio 91 for the differential pressure start-up is higher than the duty ratio 92 for the normal start-up. After the start-up of the compressor 15, the duty ratio 91 for the differential pressure start-up decreases more sharply than the duty ratio 92 for the normal start-up. After a specific time has elapsed since the start-up of the compressor 15, the duty ratio 91 for the differential pressure start-up becomes lower than the duty ratio 92 for the normal start-up. Thereafter, the duty ratio 91 for the differential pressure start-up becomes zero, and then the duty ratio 92 for the normal start-up becomes zero. In this manner, the duty ratio 91 for the differential pressure start-up shows a greater acceleration of change in ratio than the duty ratio 92 for the normal start-up.

Next, operation of the refrigerant circuit 101 is described. The compressor 15 operates with the valve of the solenoid valve 13 opened. When the compressor 15 shifts from the operating state to the operation-stop state, the valve of the solenoid valve 13 is closed in order that the compressor 15 maintains the differential pressure. Immediately before the compressor 15 starts up, the solenoid valve 13 is opened. As described above, in the present embodiment, the compressor 15 is stopped with the valve of the solenoid valve 13 closed in order to maintain the differential pressure generated during operation of the compressor 15. Due to this configuration, the compressor 15 can maintain the differential pressure over a longer time than the case where the compressor 15 is stopped with the valve opened.

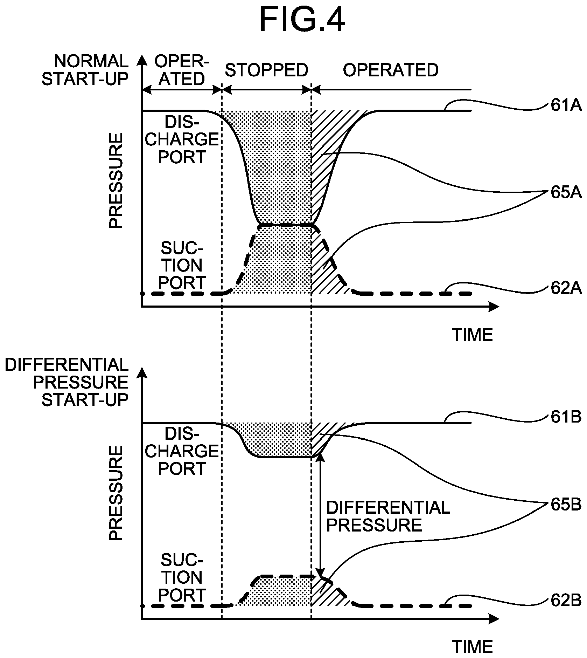

The relation between a differential pressure and an energy amount that is the amount of power needed for starting up the compressor 15 is described here. FIG. 4 is an explanatory diagram of an energy amount needed for the start-up according to the present embodiment. The horizontal axis of the graphs illustrated in FIG. 4 represents time, while the vertical axis of the graphs represents the pressure. The upper graph in FIG. 4 illustrates the relation between a differential pressure and an energy amount when the normal start-up is performed. The lower graph in FIG. 4 illustrates the relation between a differential pressure and an energy amount when the differential pressure start-up is performed. It is possible to calculate the energy amount when the normal start-up or the differential pressure start-up is performed on the basis of the time from the beginning to completion of the start-up and on the basis of a differential pressure varied from the beginning to completion of the start-up. The beginning of the start-up indicates the time at which the compressor 15 starts operating from the operation-stop state. The completion of the start-up indicates the time at which the compressor 15 enters the constant operational state.

FIG. 4 illustrates the pressure at the discharge port as pressure characteristics 61A and 61B and illustrates the pressure at the suction port as pressure characteristics 62A and 62B. The pressure characteristics 61A and 62A indicate the pressure when the normal start-up is performed. The difference between the pressure characteristics 61A and the pressure characteristics 62A indicates a differential pressure when the normal start-up is performed. The pressure characteristics 61B and 62B indicate the pressure when the differential pressure start-up is performed. The difference between the pressure characteristics 61B and the pressure characteristics 62B indicates a differential pressure when the differential pressure start-up is performed.

The pressure characteristics 61A, 61B, 62A, and 62B each indicate the pressure during operation of the compressor 15, the pressure during operation stop of the compressor 15, and the pressure when the compressor 15 restarts its operation. As indicated by the pressure characteristics 61A and 61B, the pressure at the discharge port is stable in a high-pressure state during operation before the stop. As indicated by the pressure characteristics 62A and 62B, the pressure at the suction port is stable in a low-pressure state during operation before the stop. Due to these pressure characteristics, a greater differential pressure is generated between the discharge port and the suction port during operation before the operation stopping process is started.

In a case where the normal start-up is performed, the compressor 15 is stopped with the valve of the solenoid valve 13 opened. Due to this configuration, when the normal start-up is performed, the pressure at the discharge port decreases sharply and the pressure at the suction port increases sharply after the operation stop as indicated by the pressure characteristics 61A and 62A. Subsequently, after some time period has elapsed since the operation stop, the pressure at the discharge port becomes equal to the pressure at the suction port as indicated by the pressure characteristics 61A and 62A. As a result, a differential pressure between the discharge port and the suction port becomes zero. In other words, when the normal start-up is performed, the pressure at the discharge port and the pressure at the suction port are balanced after some time period has elapsed since the compressor 15 has stopped its operation.

In a case where the normal start-up is performed, when the compressor 15 is restarted from the operation-stop state, the pressure at the discharge port needs to be increased sharply and the pressure at the suction port needs to be reduced sharply as indicated by the pressure characteristics 61A and 62A. This is because in a case where the differential pressure start-up is performed, a differential pressure between the discharge port and the suction port is zero when the compressor 15 is in an operation-stop state. In a case where the normal start-up is performed, a differential pressure during the operation stop is zero. Thus, at the time of restart, the pressure at the discharge port needs to be changed greatly, the pressure at the suction port needs to be changed greatly, and the restarting process needs a long period of time. As a result, the compressor 15 needs a greater energy amount 65A for restarting operation in a case where the normal start-up is performed.

In a case where the differential pressure start-up is performed, the compressor 15 is stopped with the valve of the solenoid valve 13 closed. Due to this configuration, when the differential pressure start-up is performed, the pressure at the discharge port slightly decreases and the pressure at the suction port slightly increases after the operation stop as indicated by the pressure characteristics 61B and 62B. Subsequently, even after some time period has elapsed since the operation stop, a greater differential pressure between the discharge port and the suction port still remains as indicated by the pressure characteristics 61B and 62B. In other words, when the differential pressure start-up is performed, the compressor 15 still maintains a greater differential pressure even after some time period has elapsed since the operation stop.

In a case where the differential pressure start-up is performed, when the compressor 15 is restarted from the operation-stop state, the pressure at the discharge port only needs to be slightly increased and the pressure at the suction port only needs to be slightly reduced as indicated by the pressure characteristics 61B and 62B. In other words, when the differential pressure start-up is performed, only a small change in pressure at the discharge port and a small change in pressure at the suction port are needed compared with the case when the normal start-up is performed.

When the differential pressure start-up is performed, there is a greater differential pressure during operation stop than the case when the normal start-up is performed. Thus, at the time of restart of the operation, the change in pressure at the discharge port is small, the change in pressure at the suction port is small, and the restarting process time is short as compared to when the normal start-up is performed. As a result, the compressor 15 can perform the differential pressure start-up with an energy amount 65B smaller than the energy amount 65A needed for performing the normal start-up. As described above, when the differential pressure start-up is performed, the workload can be reduced by the amount of differential pressure compared with the case when the normal start-up is performed. This leads to a reduction in the energy amount.

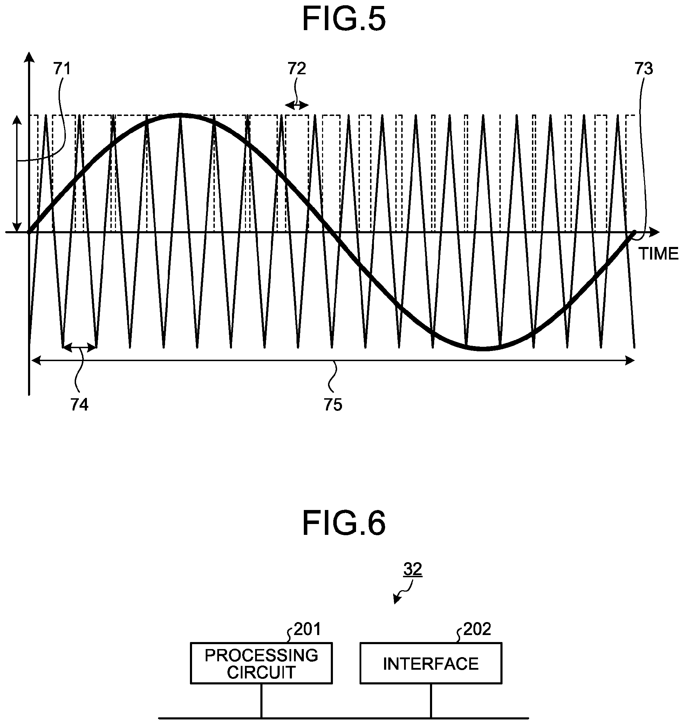

The relation between the duty ratio and the output voltage is described here. FIG. 5 is an explanatory diagram of the relation between the duty ratio and the output voltage according to the present embodiment. The horizontal axis of the graph illustrated in FIG. 5 represents time, while the vertical axis of the graph represents the duty ratio and the output voltage amplitude. FIG. 5 illustrates a carrier cycle 74, a duty ratio 72, output voltage characteristics 73, an output voltage amplitude 71, and an output voltage cycle 75.

The carrier cycle 74 is a computation cycle for controlling the compressor 15. The compressor driving circuit 102 computes an output voltage every single carrier cycle or multiple carrier cycles.

The duty ratio 72 is a ratio of a pulse of a DC voltage to be applied to the inverter circuit 17. The duty ratio 72 is indicated as a ratio of the DC-voltage application time to the time of a single pulse. The compressor driving circuit 102 adjusts the output voltage amplitude 71 by adjusting the length of the duty ratio 72, that is, the density of the duty ratio 72. As the compressor driving circuit 102 changes the duty ratio 72 more abruptly, the compressor driving circuit 102 can obtain a greater amplitude 71.

The output voltage characteristics 73 show characteristics of the voltage to be output from the compressor driving circuit 102 to the compressor 15. The voltage to be output from the compressor driving circuit 102 to the compressor 15 is determined by the duty ratio 72. The output voltage amplitude 71 shows an amplitude of the output voltage characteristics 73. The output voltage cycle 75 shows a cycle of the output voltage characteristics 73.

As described above, the compressor driving circuit 102 controls the output voltage characteristics 73 by using the duty ratio 72. The compressor driving circuit 102 sets the amount of change in the duty ratio 72 per unit time for the differential pressure start-up to be greater than the amount of change in the duty ratio 72 per unit time for the normal start-up. As described above, by setting different values of a parameter such as the duty ratio 72 for the differential pressure start-up and the normal start-up, the compressor driving circuit 102 can perform appropriate start-up corresponding to the start-up sequence.

A hardware configuration of the start-up determination device 32 is described here. The start-up determination device 32 is implemented by a processing circuit. Dedicated hardware is an example of this processing circuit. FIG. 6 is a diagram illustrating an example of a hardware configuration of the start-up determination device according to the present embodiment. In a case where the start-up determination device 32 is dedicated hardware, the start-up determination device 32 includes a processing circuit 201 and an interface 202 which are illustrated in FIG. 6.

The processing circuit 201 transmits and receives necessary information through the interface 202 in order to perform the start-up method determination process which has been described in the present embodiment. The processing circuit 201 is a single circuit, a composite circuit, a programmed processor, a parallel programmed processor, an application specific integrated circuit (ASIC), a field programmable gate array (FPGA), or a combination of these elements.

It is allowable that the processing circuit that implements the start-up determination device 32 is a control circuit that includes a processor. It is also allowable that the start-up determination device 32 is configured from a plurality of processing circuits. In a case where the processing circuit that implements the start-up determination device 32 is implemented by the control circuit that includes a processor, this control circuit includes a memory as well as the processor. The processor is a CPU (central processing unit, also referred to as a central processor, a processing device, a calculation device, a microprocessor, a microcomputer, a processor, or a digital signal processor (DSP)). The memory corresponds to a nonvolatile or volatile semiconductor memory such as a random access memory (RAM), a read only memory (ROM), or a flash memory, or a magnetic disk.

In the case where the processing circuit that implements the start-up determination device 32 is a control circuit that includes a processor, the processor reads and executes a program that is stored in the memory and that describes the process to be performed by the start-up determination device 32 so as to implement the start-up determination device 32. The memory is also used as a temporary memory for the processor to perform each processing.

The start-up determination device 32 is not limited to determining the start-up method on the basis of a differential pressure, but may also determine the start-up method on the basis of the outside-air temperature or the evaporator temperature. As the outside-air temperature becomes higher, the differential pressure becomes greater and the compressor 15 generates greater mechanical vibrations at the time of start-up. Therefore, when the outside-air temperature is equal to or lower than a first temperature, there is a smaller differential pressure and thus the start-up determination device 32 determines to perform the normal start-up. Further, when the outside-air temperature is equal to or higher than a second temperature, the start-up determination device 32 determines to perform the normal start-up. Furthermore, when the evaporator temperature is higher than a third temperature, the start-up determination device 32 determines to perform the normal start-up.

It is allowable that a part or all of the switching elements 51 to 56 used in the inverter circuit 17 are formed of a wide bandgap semiconductor. The wide bandgap semiconductor is a semiconductor having a wider bandgap than a silicon bandgap. A typical wide bandgap semiconductor is SiC (silicon carbide), GaN (gallium nitride), or diamond.

The switching elements 51 to 56 formed of a wide bandgap semiconductor have a lower power loss, and it is thus possible to improve the efficiency of the switching elements 51 to 56. This also makes it possible to improve the efficiency of the refrigerant circuit 101.

Further, use of the wide bandgap semiconductor prevents an increase in power loss even when the carrier frequency is controlled to become relatively high. For this reason, the carrier frequency is increased and all the switching elements 51 to 56 are controlled at a higher speed on the basis of the increased carrier frequency, so that the switching elements 51 to 56 can be more minutely controlled. Accordingly, a further reduction in vibrations can be achieved.

It is possible that freewheeling diodes 81 to 86 are formed of a wide bandgap semiconductor. The switching elements 51 to 56 and the freewheeling diodes 81 to 86 are not limited to being formed of a wide bandgap semiconductor.

As described above, in the present embodiment, the start-up determination device 32 determines to perform the differential pressure start-up when a differential pressure is higher than the first differential pressure and lower than the second differential pressure, and determines to perform the normal start-up when a differential pressure is equal to or lower than the first differential pressure or is equal to or higher than the second differential pressure. The compressor driving circuit 102 then causes the compressor 15 to perform either the normal start-up or the differential pressure start-up on the basis of the determination result from the start-up determination device 32. This can reduce vibrations of the compressor 15 generated when the compressor 15 starts up, and can thus reduce damage to the compressor 15 attributable to the vibrations.

Therefore, fatigue breakage of members such as the discharge port caused by vibrations of the compressor 15 can be reduced. Thus, the operation reliability can be ensured over a longer period of time. Because the operation reliability can be ensured over a longer period of time, this makes it possible to perform the differential pressure start-up over a longer period of time. Because the differential pressure start-up can be performed over a longer period of time, the energy amount can be reduced by the amount of differential pressure over a longer period of time. This leads to energy saving at the time of start-up. In addition, even when the compressor 15 starts up at a speed higher than a specific speed, the compressor driving circuit 102 can still be applied to the compressor 15.

The start-up determination device 32 estimates a differential pressure on the basis of the outside-air temperature. This can facilitate accurate estimation of the differential pressure. The start-up determination device 32 estimates a differential pressure on the basis of the evaporator temperature. This can facilitate accurate estimation of the differential pressure. The start-up determination device 32 estimates a differential pressure by using the opened/closed state of the valve of the solenoid valve 13, the elapsed time since the compressor 15 is stopped, the rotational speed of the motor 25 before the compressor 15 is stopped, or the output voltage from the inverter circuit 17 to the motor 25 before the compressor 15 is stopped. This can facilitate accurate estimation of the differential pressure.

When the compressor 15 is stopped, the valve of the solenoid valve 13 is closed, and thus a greater differential pressure can still be maintained even after the stop of the compressor 15. Due to this configuration, the compressor 15 is more likely to perform the differential pressure start-up. Accordingly, there is a higher likelihood that the energy amount needed for the start-up can be reduced.

The duty ratio controller 31 adjusts the duty ratios 91 and 92 to thereby switch between the normal start-up and the differential pressure start-up. This can facilitate the switching between the normal start-up and the differential pressure start-up.

The configurations described in the above embodiment are only examples of an aspect of the present invention. The configurations can be combined with other well-known techniques, and part of each of the configurations can be omitted or modified without departing from the scope of the present invention.

### Reference Signs List

11 evaporator, 12 expansion valve, 13 solenoid valve, 14 condenser, 15 compressor, 16 DC voltage power supply, 17 inverter circuit, 21, 22 temperature sensor, 25 motor, 31 duty ratio controller, 32 start-up determination device, 51 to 56 switching element, 61A, 61B, 62A, 62B pressure characteristic, 65A, 65B energy amount, 71 amplitude, 72, 91, 92 duty ratio, 73 output voltage characteristic, 74 carrier cycle, 75 output voltage cycle, 81 to 86 freewheeling diode, 100 refrigeration cycle apparatus, 101 refrigerant circuit, 102 compressor driving circuit, 501 to 503 connection point.

## Claims

1. A refrigeration cycle apparatus comprising:
a condenser to dissipate heat from refrigerant;
an evaporator to cause the refrigerant to absorb heat;
a compressor to draw the refrigerant, delivered from the condenser, from a suction port, compress the refrigerant using rotation of a motor, and discharge the refrigerant compressed from a discharge port to the evaporator; and
a compressor driving circuit to control rotation of the motor by an inverter circuit, wherein
the compressor driving circuit includes a start-up determination device to determine whether the compressor is caused to perform a normal start-up or a differential pressure start-up on a basis of a differential pressure that is a pressure difference between the suction port and the discharge port at a time of starting up the compressor, where the normal start-up is to start up the compressor with an output voltage having a first amplitude and the differential pressure start-up is to start up the compressor with an output voltage having a second amplitude greater than the first amplitude,
the start-up determination device determines to perform the differential pressure start-up when the differential pressure is higher than a first differential pressure and lower than a second differential pressure, and determines to perform the normal start-up when the differential pressure is equal to or higher than the second differential pressure or is equal to or lower than the first differential pressure, and
the compressor driving circuit causes the compressor to perform either the normal start-up or the differential pressure start-up on a basis of a determination result from the start-up determination device.

2. The refrigeration cycle apparatus according to claim 1, further comprising a first temperature detection unit to detect an outside-air temperature that is a temperature outside the compressor, wherein
the start-up determination device estimates the differential pressure on a basis of the outside-air temperature, and determines whether the compressor is caused to perform the normal start-up or the differential pressure start-up on a basis of the differential pressure estimated.

3. The refrigeration cycle apparatus according to claim 1 or 2, further comprising a second temperature detection unit to detect an evaporator temperature that is a temperature in the evaporator, wherein
the start-up determination device estimates the differential pressure on a basis of the evaporator temperature, and determines whether the compressor is caused to perform the normal start-up or the differential pressure start-up on a basis of the differential pressure estimated.

4. The refrigeration cycle apparatus according to any one of claims 1 to 3, wherein the start-up determination device estimates the differential pressure by using an opened/closed state of a valve included in a solenoid valve to close a flow path of the refrigerant, an elapsed time since the compressor is stopped, a rotational speed of the motor before the compressor is stopped, or an output voltage from the inverter circuit to the motor before the compressor is stopped, and determines whether the compressor is caused to perform the normal start-up or the differential pressure start-up on a basis of the differential pressure estimated.

5. The refrigeration cycle apparatus according to any one of claims 1 to 3, further comprising a solenoid valve to close a flow path of the refrigerant, wherein
when the compressor is stopped, a valve of the solenoid valve is closed so that the differential pressure increases.

6. The refrigeration cycle apparatus according to any one of claims 1 to 5, wherein
the compressor driving circuit further includes a duty ratio controller to control a duty ratio of a pulse of a DC voltage to be applied to the inverter circuit on a basis of a determination result from the start-up determination device, and
the inverter circuit outputs a voltage corresponding to the duty ratio to the compressor to switch between the normal start-up and the differential pressure start-up.

7. The refrigeration cycle apparatus according to any one of claims 1 to 6, wherein
the inverter circuit includes a switching element, and
the switching element is formed of a wide bandgap semiconductor.

8. A driving device comprising:
an inverter circuit to control a compressor to compress refrigerant drawn from a suction port and discharge the refrigerant compressed from a discharge port; and
a start-up determination device to determine whether the compressor is caused to perform a normal start-up or a differential pressure start-up on a basis of a differential pressure that is a pressure difference between the suction port and the discharge port at a time of starting up the compressor, where the normal start-up is to start up the compressor with an output voltage having a first amplitude and the differential pressure start-up is to start up the compressor with an output voltage having a second amplitude greater than the first amplitude, wherein
the start-up determination device determines to perform the differential pressure start-up when the differential pressure is higher than a first differential pressure and lower than a second differential pressure, and determines to perform the normal start-up when the differential pressure is equal to or higher than the second differential pressure or is equal to or lower than the first differential pressure, and
the inverter circuit causes the compressor to perform either the normal start-up or the differential pressure start-up on a basis of a determination result from the start-up determination device.
